# EUROPÄISCHE PATENTANMELDUNG

(11) **EP 3 680 161 A1**
(43) Veröffentlichungstag der Anmeldung: **15.07.2020**
(21) Anmeldenummer: 19151418.1
(22) Anmeldetag: 11.01.2019
(51) Int. Cl.: B62M 6/55, F16H 1/16

(54) **SCHNECKENGETRIEBE UND HILFSANTRIEB FÜR EIN FAHRZEUG**

(71) Anmelder: Rolless GmbH, 88480 Achstetten (DE)
(72) Erfinder: Rodi, Wolfgang, 88471 Laupheim / Baustetten (DE)
(74) Vertreter: Caspary, Karsten

(57) **Zusammenfassung**

Ein erfindungsgemäßes Schneckengetriebe (1) umfasst eine Schnecke (4) mit zumindest einem schraubenförmigen Gang (6) und ein Schneckenrad (2), das eine Mehrzahl von entlang eines Umfangs des Schneckenrads (2) verteilte Laufrollen (8) umfasst, die dazu eingerichtet sind, mit dem Gang (6) der Schnecke (4) einzugreifen. Jede Laufrolle (8) ist um eine Laufrollenachse (10) drehbar am Schneckenrad (2) gelagert und die Laufrollenachsen (10) schneiden eine Schneckenradachse (12) nicht.

## Beschreibung

Die vorliegende Erfindung betrifft ein Schneckengetriebe und einen Hilfsantrieb mit Schneckengetriebe für ein Fahrzeug, insbesondere für ein Fahrrad.

Die Entwicklung und das Angebot an E-Bikes und Pedelecs mit zwei, drei oder vier Rädern haben in den letzten Jahren erheblich zugenommen. Gegenüber herkömmlichen Fahrrädern sind bei der Entwicklung von Fahrradgetrieben und des gesamten Antriebsstrangs besondere Anforderungen zu berücksichtigen. Die zunehmende Leistung der verwendeten Elektromotoren führt zu hohen Belastungen, die auf das Fahrradgetriebe wirken. Neben dem erhöhten Leistungsbedarf und den dadurch auftretenden höheren Drehmomenten spielen der verfügbare Bauraum, das Gewicht und das erreichbare Fahrvergnügen zu berücksichtigende Kriterien bei der Konstruktion und Auslegung von Hilfsantrieben für solche Fahrzeuge eine erhebliche Rolle.

Es besteht daher der Bedarf an verbesserten Getrieben und Hilfsantrieben, insbesondere im Bereich der E-Bikes und Pedelecs.

Die DE 10 2006 032 016 B4 beschreibt beispielsweise einen elektrischen Hilfsantrieb für ein Fahrrad, bei dem ein Kegelradgetriebe zur Übertragung des Drehmoments von einem Motor auf eine Kurbelwelle verwendet wird. Gemäß der WO 2015/080687 A1 wird ein Schneckengetriebe als Reduktionsgetriebe zwischen einem Elektromotor und einer Tretkurbel verwendet. Die hier beschriebene Bauform im Bereich des Tretlagers benötigt jedoch erheblichen Bauraum, vor allem in Querrichtung des Fahrrads zwischen den Pedalen.

Starke Antriebe, die ein Spitzendrehmoment von bis zu 120 Nm aufbringen können, umfassen beispielsweise ein harmonisches Pin-Ring-Getriebe, wie es in der WO 2014/060974 A1 beschrieben ist. Die um das Tretlager herum angeordnete Antriebseinheit nimmt jedoch auch verhältnismäßig viel Bauraum zwischen den Pedalen ein, und weist eine komplexe Konstruktion sowie ein relativ hohes Gewicht auf.

Der zwischen den Pedalen benötigte Bauraum ist jedoch durch den Q-Faktor (der seitliche Abstand der Montagepunkte der Pedale an der Kurbelgarnitur) beschränkt, der in der Regel kleiner als 176 mm sein soll. Nimmt das Getriebe bereits einen Großteil dieses Bauraums ein, bleibt kaum Platz für weitere Ritzel bzw. Kettenblätter.

Gemäß EP 0 816 215 B1 wird ein Planetengetriebe als Reduktionsgetriebe eines Fahrrads mit elektrischem Hilfsmotor verwendet.

Nachteilig ist, dass Getriebe, die sich für Motoren mit hoher Leistung bzw. großem Drehmoment eignen, in der Regel schwer sind und einen großen Bauraum benötigen. Dies wirkt sich nicht nur negativ auf das Fahrgefühl sowie die Optik aus, sondern schränkt zugleich die konstruktiven Möglichkeiten stark ein. Einige Getriebebauformen haben weiterhin den Nachteil, dass es zu ungewünschten Schwingungen bzw. Vibrationen kommt. Bei Zahnradgetrieben werden in diesem Fall Schrägverzahnungen eingesetzt, die aber den Nachteil haben, dass es zu ungewünschten Leistungsverlusten durch auftretende Axialkräfte kommt. Insbesondere aufgrund der begrenzten Akkukapazitäten, die mitgeführt werden können, sind die im Getriebe entstehenden Verluste so weit wie möglich zu reduzieren. Zudem ist es oft mit einem erheblichen Aufwand verbunden, Komponenten des Antriebsstrangs zur Wartung und Reparatur auszutauschen.

Es ist daher die Aufgabe der vorliegenden Erfindung, ein verbessertes Getriebe und einen verbesserten Hilfsantrieb für Fahrzeuge, insbesondere für Fahrräder bereitzustellen, die die zuvor beschriebenen Nachteile des Stands der Technik überwinden und sich insbesondere zur Übertragung hoher Drehmomente bei hohem Gesamtwirkungsgrad eignen sowie ein geringes Gewicht und einen geringen Bauraum aufweisen.

Diese Aufgabe wird durch die Gegenstände der Ansprüche 1 und 7 gelöst. Bevorzugte Ausführungsformen sind Gegenstand der abhängigen Unteransprüche.

Erfindungsgemäß umfasst ein Schneckengetriebe eine Schnecke mit zumindest einem schraubenförmigen Gang und ein Schneckenrad, das eine Mehrzahl von entlang eines Umfangs des Schneckenrads verteilte Laufrollen umfasst, die dazu eingerichtet sind, mit dem Gang der Schnecke einzugreifen. Jede Laufrolle ist um eine Laufrollenachse drehbar am Schneckenrad gelagert. Die Laufrollenachsen schneiden eine Schneckenradachse nicht. Folglich sind die Laufrollenachsen schräg zu einer radialen Achse des Schneckenrads ausgerichtet. Die Laufrollenachsen zweier benachbarter Laufrollen schneiden sich beabstandet von der Schneckenradachse.

Auf diese Weise wird erreicht, dass das Schneckengetriebe geringe Verluste und somit einen verbesserten Wirkungsgrad aufweist. Zudem ist es möglich, bei geringem Bauraum ein großes Übersetzungsverhältnis zu realisieren, was wiederum den Einsatz kleinerer bzw. leichterer Antriebe ermöglicht. Bei herkömmlichen Schneckengetrieben kommt es unter anderem aufgrund der Gleitbewegung zwischen dem Schneckenrad und der Schnecke zu relativ großen Verlusten. Dadurch, dass erfindungsgemäß Laufrollen am Schneckenrad vorgesehen sind, die mit der Schnecke eingreifen und jeweils um eine Laufrollenachse drehbar sind, können die Reibungsverluste minimiert werden.

Durch diese Schrägstellung der Laufrollenachsen bezüglich einer radialen Achse des Schneckenrads ist es möglich, bei gleichem Durchmesser des Schneckenrads mehr Laufrollen bzw. Laufrollen größeren Durchmessers entlang des Umfangs des Schneckenrads anzuordnen. Wären die Laufrollenachsen radial ausgerichtet, müsste zwischen den Mantelflächen der Laufrollen ein Abstand in Umfangsrichtung des Schneckenrads vorgesehen werden, der es ermöglichen würde, dass die Laufrollen mit den Windungen der Schnecke eingreifen. Durch die erfindungsgemäße Schrägstellung der Laufrollenachsen bezüglich einer radialen Achse des Schneckenrads sind die Laufflächen der Laufrollen nach außen eingerichtet. Diese Laufrollen kontaktieren im Eingriff mit der Schnecke dieselbe. Es ist daher möglich, dass sich zwei benachbarte Laufrollen in radialer Richtung des Schneckenrads überlappen. Die Laufrollen sind dann schuppenförmig entlang des Umfangs entlang des Schneckenrads angeordnet. In jedem Fall können die Laufrollen entlang des Umfangs des Schneckenrads sehr eng nebeneinander angeordnet sein, da ein Eingriff mit der Schnecke nicht unmittelbar zwischen den Mantelflächen zweier benachbarter Laufrollen erfolgt. Alternativ zum Vorsehen mehrerer Laufrollen kann der Umfang bzw. Durchmesser des Schneckenrads bei gleicher Anzahl von Laufrollen reduziert werden, wodurch sich die Dimensionen des gesamten Getriebes minimieren lassen.
Bei geringerem Durchmesser des Schneckenrads sind die Laufrollen zudem näher am Zentrum des Schneckenrads angeordnet, was wiederum einem geringeren Massenträgheitsmoment des Schneckenrads zu Gute kommt.

Die Laufrollen bzw. Rollenkörper der Laufrollen weisen vorzugsweise eine Dicke in axialer Richtung (zwischen den zwei gegenüberliegenden Stirnseiten einer Laufrolle) auf, die zwischen 1 mm und 15 mm, bevorzugt zwischen 2 mm und 10 mm und mehr bevorzugt zwischen 3 mm und 8 mm beträgt. Im Wesentlichen unabhängig von der Dicke weisen die Laufrollen bzw. Rollenkörper der Laufrollen einen Durchmesser auf, der zwischen 5 mm und 80 mm, bevorzugt zwischen 10 mm und 60 mm und mehr bevorzugt zwischen 15 mm und 50 mm beträgt. Größere und kleinere Laufrollen sind nicht ausgeschlossen. Vielmehr können die Dimensionen an den jeweiligen Anwendungsfall entsprechend angepasst werden.

In einer bevorzugten Ausführungsform ist die Schnecke derart ausgebildet, dass sich der Durchmesser der Schnecke in axialer Richtung der Schnecke verändert. Vorzugsweise nimmt der Durchmesser der Schnecke in axialer Richtung der Schnecke von einem Ende der Schnecke zum anderen Ende der Schnecke zu. Es ist dann bevorzugt, dass der kleinere Durchmesser an dem Ende der Schnecke angeordnet ist, das den Einlauf des Schneckenrads bildet, und der größere Durchmesser an dem Ende der Schnecke angeordnet ist, das den Auslauf des Schneckenrads bildet. Dies führt dazu, dass Geschwindigkeits- bzw. Beschleunigungssprünge, denen die Laufrollen ausgesetzt sind, sobald sie mit der Schnecke eingreifen, möglichst gering gehalten werden können.

Dies liegt daran, dass bei kleinerem Durchmesser der Schnecke die Umfangsgeschwindigkeit geringer ist, während bei größerem Durchmesser der Schnecke die Umfangsgeschwindigkeit höher ist. Sobald eine Laufrolle mit der Schnecke am Einlauf der Schnecke eingreift, wird die Laufrolle durch die Schnecke beschleunigt. Ist die Umfangsgeschwindigkeit der Schnecke am Einlauf verhältnismäßig gering, ist auch der Unterschied zwischen der Umdrehungsgeschwindigkeit der Laufrollen und der Umlaufgeschwindigkeit der Schnecke am Einlauf gering. Nimmt der Durchmesser der Schnecke dann in axialer Richtung vom Einlauf zum Auslauf der Schnecke zu, wird eine in Eingriff mit der Schnecke stehende Laufrolle langsam beschleunigt. Am Auslauf der Schnecke weist diese eine höhere Umfangsgeschwindigkeit auf, sodass die Laufrollen die Schnecke mit erhöhter Umfangsgeschwindigkeit verlassen. Während der Drehung des Schneckenrads vom Auslauf der Schnecke bis zum Einlauf der Schnecke nimmt diese Drehgeschwindigkeit der Laufrollen reibungsbedingt ab. Idealerweise kommt eine Laufrolle zwischen dem Auslauf der Schnecke und dem erneuten Einlauf in die Schnecke nicht zum Stillstand, sondern die Umdrehungsgeschwindigkeit der Laufrollen nähert sich der Geschwindigkeit an, auf die sie von der Schnecke am Einlauf beschleunigt wird. Der Geschwindigkeitsunterschied und somit die Beschleunigungssprünge am Einlauf der Schnecke werden dadurch minimiert, wodurch sich die Belastung auf die Laufrollen verringert und die Laufrollen selbst sowie deren Lagerung im Schneckenrad geringer dimensioniert werden können.

Alternativ kann die Schnecke aber auch derart ausgebildet sein, dass ihr Durchmesser in axialer Richtung im Wesentlichen konstant ist. Eine Veränderung des Durchmessers in axialer Richtung ergibt sich dann nur durch die Geometrie des schraubenförmigen Gangs der Schnecke, insbesondere bei sich in axialer Richtung verändernder Steigung der Windungen des Gangs. Die Umfangsgeschwindigkeit der Schnecke um ihre Rotationsachse ändert sich jedoch im Wesentlichen nicht oder nur geringfügig zwischen den beiden axialen Enden der Schnecke.

In einer weiteren alternativen Ausführungsform ist die Schnecke als Globoidschnecke ausgebildet. Der Durchmesser einer solchen Schnecke nimmt dann in axialer Richtung vom Einlauf in Richtung des Auslaufs zunächst ab und dann, vorzugsweise symmetrisch, von einem Mittelbereich in Richtung des Auslaufs der Schnecke wieder zu. Es versteht sich, dass die Schneckengeometrie im Zuge der Getriebeauslegung beliebig an die gewünschten Anforderungen angepasst werden kann und dass andere, z. B. auch Mischformen der hierin beschriebenen Schneckenformen möglich sind.

In einer bevorzugten Ausführungsform sind die Laufrollen im Wesentlichen tonnenförmig, zylindrisch, ringförmig oder scheibenförmig ausgebildet. Derartige Laufrollen lassen sich besonders einfach und somit kostengünstig herstellen und gut am Schneckenrad lagern. Schmale ringförmige oder scheibenförmige Laufrollen haben weiterhin den Vorteil, dass sie aufgrund der geringen Höhe in axialer Richtung im Vergleich zum Durchmesser weniger Bauraum in Anspruch nehmen und eine geringere Massenträgheit aufweisen als standardmäßige tonnenförmige oder zylindrische Laufrollen. Tonnenförmige oder zylindrische Laufrollen weisen im Verhältnis zum Durchmesser eine größere Höhe in axialer Richtung auf als die zuvor beschriebenen Ringe oder Scheiben. Derartige Laufrollen eignen sich auch weniger in Schneckengänge einzugreifen, die bevorzugt schmal ausgebildet sind und eine geringe Steigung aufweisen.

Die Laufrollen sind vorzugsweise mittels Wälzlager am Schneckenrad gelagert. Hierfür können alle gängigen Wälzlager, wie zum Beispiel Kugellager oder Tonnenlager verwendet werden. Bevorzugt sind die Laufrollen mittels Nadellager am Schneckenrad gelagert. Nadellager können statische Belastungen im Vergleich zu anderen Wälzlagern besser aufnehmen und sitzen weiter im Zentrum der Laufrolle. Im Zentrum der Laufrolle steht für die Wälzlager mehr Platz in axialer Richtung bezüglich der Wälzlagerachse zur Verfügung. Zudem führt eine Anordnung der Wälzkörper nahe an der Wälzlagerachse zu geringeren Beschleunigungen der Wälzkörper in Umfangsrichtung, was sich positiv auf die Lebensdauer der Wälzkörper und somit der Wälzlager auswirkt.

Es ist bevorzugt, dass jede Laufrolle einen Rollenkörper und eine Achse umfasst, die die Laufrollenachse definiert und beispielsweise durch einen Stift, eine Hülse oder einen Bolzen gebildet ist. Diese Achse der Laufrolle ist zumindest mit einem Ende im Schneckenrad aufgenommen, beispielsweise in dieses eingepresst oder eingeschraubt. Auf der Achse ist dann vorzugsweise ein Wälzlager angeordnet, auf dem wiederrum der Rollenkörper sitzt.

In einer besonders bevorzugten Ausführungsform ist jede Laufrolle in axialer Richtung bezüglich der Laufrollenachse beidseitig des Rollenkörpers im Schneckenrad gelagert. Dadurch wird eine Radialkraft, die auf die Rollenkörper wirkt, beidseitig abgestützt. Das Schneckenrad kann hierzu Aufnahmen aufweisen, die im Wesentlichen C-förmig ausgebildet sind und sich oberhalb und unterhalb der Laufrollen erstrecken. Eine Laufrolle kann dann beidseitig des Rollenkörpers in oder an dieser Aufnahme gelagert sein. Z. B. weisen beide Schenkel einer im Wesentlichen C-förmigen Aufnahme jeweils eine Öffnung zur Aufnahme jeweils eines axialen Endes der Achse einer Laufrolle auf. Es ist auch denkbar, dass einer der beiden Schenkel, vorzugsweise der in radialer Richtung bezüglich des Schneckenrads außenliegende Schenkel, an seinem freien Ende eine Lagerfläche aufweist, an der die Achse der Laufrolle abgestützt ist. Verschiedene andere Möglichkeiten zur Lagerung der Laufrollen am Schneckenrad sind dem Fachmann ersichtlich.

Vorzugsweise weist die Lagerung der Laufrollen ein axiales Spiel auf, um eine Überbestimmung während des Eingriffs mit der Schnecke zu vermeiden.

Jede Laufrolle weist eine umlaufende Lauffläche auf und die Schnecke weist eine Kontaktfläche auf, die durch eine Flanke des Gangs der Schnecke gebildet wird. Die Lauffläche einer mit der Schnecke in Eingriff stehenden Laufrolle und die Kontaktfläche der Schnecke berühren sich.

In einer bevorzugten Ausführungsform sind die Laufflächen der Laufrollen und die Kontaktfläche der Schnecke komplementär zueinander ausgebildet, vorzugsweise gekrümmt. Sind die Laufrollen mit axialem Spiel gelagert, kann dadurch erreicht werden, dass die Laufrollen axial zentriert werden, während sie mit der Schnecke in Eingriff stehen.

Vorzugsweise sind die Laufflächen der Laufrollen dabei konvex gekrümmt und die Kontaktfläche der Schnecke ist konkav gekrümmt. In einem axialen Schnitt betrachtet, ist die Lauffläche einer Laufrolle dann bezüglich des Rollenkörpers nach außen gewölbt. Es können jedoch auch die Laufflächen der Laufrollen konkav und die Kontaktfläche der Schnecke konvex ausgebildet sein. Alternativ können andere Geometrien vorgesehen werden, die sich zur komplementären Ausbildung der Laufflächen und der Kontaktfläche eignen.

Es ist weiterhin bevorzugt, dass das Schneckengetriebe nur eine Wirkrichtung aufweist. Das bedeutet, dass eine Drehmomentübertragung nur in eine Drehrichtung des Schneckenrads und der Schnecke möglich ist. Maßgeblich sind die Schrägstellung der Laufrollenachsen bezüglich einer radialen Achse des Schneckenrads sowie die Ausbildung der Schnecke, insbesondere des schraubenförmigen Gangs, dafür verantwortlich, dass nur eine Wirkrichtung möglich ist. Es wird daher eine größere Freiheit bei der Gestaltung des Schneckenrads und der Schnecke ermöglicht, wenn das Schneckengetriebe auf eine Wirkrichtung beschränkt ist.

Ein erfindungsgemäßer Hilfsantrieb für ein Fahrzeug, insbesondere für ein Fahrrad, umfasst einen Motor mit einer Antriebswelle, einen Energiespeicher, der mit dem Motor elektrisch verbunden ist, eine Ausgangswelle zum Antreiben des Fahrzeugs und ein Schneckengetriebe. Das Schneckengetriebe umfasst eine Schnecke und ein Schneckenrad, wobei die Schnecke des Schneckengetriebes mit der Antriebswelle des Motors gekoppelt ist, das Schneckenrad mit der Ausgangswelle gekoppelt ist, und die Schnecke zumindest einen schraubenförmigen Gang aufweist. Das Schneckenrad umfasst eine Mehrzahl von entlang eines Umfangs des Schneckenrads verteilte Laufrollen, die dazu eingerichtet sind mit dem Gang der Schnecke einzugreifen.

Durch das Schneckengetriebe kann ein großes Übersetzungsverhältnis realisiert werden. Durch das Vorsehen von Laufrollen entlang des Umfangs des Schneckenrads, die mit der Schnecke eingreifen, können die Reibungsverluste zwischen Schnecke und Schneckenrad stark minimiert werden. Es ist daher möglich, mit dem anspruchsgemäßen Getriebe ein Drehmoment mit einem möglichst hohen Wirkungsgrad vom Motor zur Ausgangswelle zu übertragen.

Dass die Schnecke des Schneckengetriebes mit der Antriebswelle des Motors "gekoppelt" ist und dass das Schneckenrad mit der Ausgangswelle "gekoppelt" ist, bedeutet dabei, dass diese Komponenten einander zugeordnet sind. Die "gekoppelten" Komponentenpaare können jeweils unmittelbar mittels geeigneter Verbindungselemente miteinander verbunden sein. Ebenso ist aber auch umfasst, dass die jeweiligen Komponentenpaare jeweils mittelbar über ein oder mehrere Zwischenelemente miteinander verbunden sind.

Eine unmittelbare Verbindung erfolgt beispielsweise, wenn die Schnecke mittels einer Welle-Nabe-Verbindung auf der Antriebswelle des Motors gelagert ist oder wenn die Schnecke eine Schneckenwelle umfasst, die direkt mit der Antriebswelle verbunden oder integral mit dieser ausgebildet ist. Das Schneckenrad kann beispielsweise direkt mittels einer Welle-Nabe-Verbindung auf der Ausgangswelle gelagert sein.

Bei einer mittelbaren Verbindung sind zwischen der Schnecke und der Antriebswelle des Motors bzw. zwischen dem Schneckenrad und der Ausgangswelle Zwischenelemente, wie z. B. ein Freilauf oder ein weiteres Getriebe angeordnet. Ein Freilauf kann z. B. zwischen dem Schneckenrad und der Ausgangswelle oder zwischen der Schnecke(nwelle) und der Antriebswelle vorgesehen sein. Eine zusätzliche Getriebestufe, z. B. in Form eines Planeten-, Stirnrad-, oder Kegelradgetriebes, könnte zwischen der Antriebswelle des Motors und der Schnecke(nwelle) und/oder zwischen dem Schneckenrad und der Ausgangswelle vorgesehen sein. Dadurch wäre ein noch kleinerer und leichterer Motor verwendbar.

Der Motor umfasst ferner eine Motorsteuerung, wie sie dem Fachmann bekannt ist und die die Energiezufuhr an den Motor sowie die Leistungsabgabe und Drehzahl des Motors regelt. Der Energiespeicher ist wiederaufladbar und stellt dem als Elektromotor ausgebildeten Motor Energie bereit.

Als Motoren eignen sich bürstenlose Gleichstrommotoren (BLDC-Motoren) besonders gut, da diese problemlos eine Drehzahl von 3.000 und mehr Umdrehungen pro Minute bei geringem Gewicht und gutem Wirkungsgrad erreichen. Mit dem Schneckengetriebe des erfindungsgemäßen Hilfsantriebs bzw. mit dem erfindungsgemäßen Schneckengetriebe, ist eine hohe Übersetzung zwischen dem Motor und der Ausgangswelle erreichbar. Die Übersetzung liegt beispielsweise im Bereich von 1:20 bis 1:60, vorzugsweise im Bereich von 1:30 bis 1:50, mehr bevorzugt im Bereich von 1:35 bis 1:45. Gängige Elektromoren können bei einer Motordrehzahl von etwa 3.000 bis 4.000 Umdrehungen pro Minute mit besonders gutem Wirkungsgrad betrieben werden. Durch eine Übersetzungsstufe kann diese Motordrehzahl auf eine Trittfrequenz von etwa 80 Umdrehungen pro Minute reduziert werden. Indem nur eine einzige Übersetzungsstufe vorgesehen ist, führt das wiederum zu einem schmalen und kleinen Getriebe mit einem geringen Gewicht.

Die Ausgangswelle kann direkt zum Antreiben des Fahrzeugs verwendet werden oder mittels weiterer Übertragungsmittel das Fahrzeug antreiben. Beispielsweise kann die Ausgangswelle als Kurbelwelle eines Fahrrads ausgebildet sein. Das Schneckenrad kann unmittelbar auf der Ausgangswelle gelagert sein oder über eine weitere Getriebestufe mit dieser verbunden sein. Das Schneckenrad kann drehfest oder zumindest in eine Richtung relativ zur Ausgangswelle drehbar auf dieser gelagert sein, beispielsweise mittels eines Freilaufs.

In einer bevorzugten Ausführungsform ist die Ausgangswelle als Hohlwelle ausgebildet, auf ihrer Außenseite mit dem Schneckenrad und auf ihrer Innenseite mit der Kurbelwelle eines Fahrrads verbunden. Zwischen dem Schneckenrad und der Ausgangswelle und zwischen der Kurbelwelle und der Ausgangswelle kann dann jeweils ein Freilauf (z. B. Klinkenfreilauf, Klemmkörperfreilauf) vorgesehen sein.

Bevorzugt ist das Schneckengetriebe des Hilfsantriebs gemäß dem zuvor beschriebenen erfindungsgemäßen Schneckengetriebe ausgebildet. Entsprechend sind die zum erfindungsgemäßen Schneckengetriebe beschriebenen Merkmale und Vorteile auch auf einen erfindungsgemäßen Hilfsantrieb übertragbar.

Es ist weiterhin besonders bevorzugt, dass der Energiespeicher und der Motor mittels einer ersten lösbaren Verbindung miteinander verbunden sind und dass der Motor und das Schneckengetriebe mittels einer zweiten lösbaren Verbindung miteinander verbunden sind. Der Hilfsantrieb weist dann einen modularen Aufbau auf.

Dadurch wird zum einen ermöglicht, dass Komponenten leicht zugänglich, entnehmbar und austauschbar sind. Z. B. ist es möglich, den Energiespeicher zum Aufladen oder zur schonenden Lagerung abzunehmen oder durch einen Energiespeicher mit geringerer oder größerer Kapazität zu ersetzen. Insbesondere kann der Energiespeicher leicht an die Leistung des Motors angepasst werden. Ist eine Unterstützung durch den Hilfsantrieb zeitweise nicht erwünscht, können der Motor und der Energiespeicher auch ganz entnommen werden, um das Gewicht des Fahrzeugs zu reduzieren.

Die erste lösbare Verbindung zwischen dem Energiespeicher und dem Motor ist vorzugsweise als Steckverbindung ausgebildet, die zumindest eine elektrische Verbindung zwischen dem Motor und dem Energiespeicher herstellt.

Durch die zweite lösbare Verbindung zwischen dem Motor und dem Schneckengetriebe wird ermöglicht, dass auch der Motor leicht entnehmbar ist, beispielsweise zur Wartung oder bei einem Defekt. Zudem können auf einfache Art und Weise Motoren verschiedener Leistung im Hilfsantrieb eingesetzt werden. Durch den modularen Aufbau des Hilfsantriebs kann dieser optimal und individuell auf den gewünschten Einsatzbereich und die damit verbundenen Anforderungen angepasst werden.

Vorzugsweise umfasst die Schnecke eine Schneckenwelle und die Schneckenwelle ist mit der Antriebswelle des Motors mittels einer Rotationsübertragungseinrichtung verbunden. Die Rotationsübertragungseinrichtung kann als Welle-Nabe-Verbindung ausgebildet sein. Verschiedene Möglichkeiten hierzu sind dem Fachmann bekannt.

Besonders bevorzugt ist die Rotationsübertragungseinrichtung als drehfeste Steckverbindung ausgebildet. Genauer ermöglicht die Rotationsübertragungseinrichtung die Übertragung eines Drehmoments, während die Schneckenwelle und die Antriebswelle in axialer Richtung relativ zueinander verschiebbar bleiben. Der Motor kann somit einfach vom Schneckengetriebe entfernt werden. Um den Motor mit dem Schneckengetriebe zu verbinden, sind lediglich die getriebeseitigen und motorseitigen Bestandteile der Rotationsübertragungseinrichtung ineinander zu stecken.

Es ist aber auch möglich, dass die Schnecke auf der Antriebswelle gelagert ist oder integral mit der Antriebswelle des Motors ausgebildet ist.

Besonders bevorzugt umfasst ein Fahrrad einen erfindungsgemäßen Hilfsantrieb. Dadurch sind die zuvor bezüglich des erfindungsgemäßen Schneckengetriebes und des erfindungsgemäßen Hilfsantriebs beschriebenen Vorteile im Bereich von Fahrradantrieben vorteilhaft nutzbar.

Es ist dann bevorzugt, dass auf der Ausgangswelle weiterhin zumindest ein Ritzel, vorzugsweise zwei oder mehr Ritzel bzw. Kettenblätter gelagert sind, die über Zugmittel mit einem Laufrad des Fahrrads verbindbar sind. Durch die erfindungsgemäße Ausbildung des Hilfsantriebs kann der dafür benötigte Bauraum so weit reduziert werden, dass neben dem Getriebe auch eine Mehrzahl von Kettenblättern auf der Ausgangswelle angeordnet werden kann, ohne den Q-Faktor negativ zu beeinflussen. Ein bevorzugter Q-Faktor liegt bei weniger als 176 mm. Als Zugmittel können beispielsweise Fahrradketten oder Zahnriemen vorgesehen werden, wie sie im Bereich der Fahrräder bekannt sind.

Es ist ferner bevorzugt, dass ein Rahmen des Fahrrads ein Unterrohr und ein Sattelrohr umfasst und dass der Motor und der Energiespeicher koaxial zum Unterrohr oder zum Sattelrohr angeordnet sind. Besonders bevorzugt sind der Motor und der Energiespeicher in das Unterrohr oder das Sattelrohr fest integriert. Der Motor und der Energiespeicher können auch aus dem Rahmen entnehmbar ausgebildet sein. Sie weisen dann jeweils ein Gehäuse oder ein gemeinsames Gehäuse auf, das im in das Fahrrad eingebauten Zustand bündig mit dem Unterrohr oder dem Sattelrohr abschließt. Dadurch können der Motor und der Energiespeicher besonders platzsparend am Fahrradrahmen angebracht werden.

Vorzugweise ist die Ausgangswelle am Rahmen gelagert. Die Ausgangswelle kann direkt am Rahmen gelagert sein oder über einen Getriebegehäuseabschnitt am Rahmen gelagert sein. Über die Ausgangswelle ist das gesamte Schneckengetriebe am Fahrradrahmen gelagert. Eine derartige Lagerung ist zum einen sehr einfach realisierbar. Zum anderen wird die Kraft beim Treten direkt von der Kurbel in den Fahrradrahmen eingeleitet. Das Getriebegehäuse muss im Wesentlichen keine großen Belastungen aufnehmen. Einzig unter Umständen vorhandene Abschnitte des Gehäuses zwischen der Ausgangswelle und der Lagerung können zu verstärken sein. Diese Abschnitte sind im Verhältnis zum übrigen Gehäuse jedoch klein, sodass das Gehäuse im Übrigen dünnwandig ausgelegt werden und vorzugsweise aus leichten Materialien gebildet sein kann.

Schließlich ist es bevorzugt, dass das Schneckenrad über einen ersten Freilauf mit der Ausgangswelle verbunden ist. Noch mehr bevorzugt ist die Ausgangswelle als Hohlwelle ausgebildet, durch die eine Kurbelwelle des Fahrrads hindurch verläuft, wobei die Kurbelwelle über einen zweiten Freilauf mit der Ausgangswelle verbunden ist. Das Schneckenrad, die Ausgangswelle und die Kurbelwelle sind koaxial angeordnet. Dies hat den Vorteil, dass bei abgeschaltetem Hilfsantrieb bzw. beim Überschreiten der gesetzlich vorgegebenen maximalen Unterstützungsgeschwindigkeit bei einem Pedelec die Kurbelwelle vom Hilfsantrieb vollständig entkoppelt wird und so ein natürliches Fahrverhalten entsteht, wie man es von einem konventionellen Fahrrad gewöhnt ist. Durch den zweiten Freilauf werden auch beim Rückwärtstreten der Kurbelwelle der Motor und das Schneckengetriebe vollständig von der Kurbelwelle entkoppelt. Alternativ kann ein Freilauf zum Motor auch zwischen der Antriebswelle des Motors und der Schnecke bzw. Schneckenwelle liegen.

Weitere Merkmale und Vorteile der vorliegenden Erfindung ergeben sich aus der nachfolgenden Beschreibung unter Bezugnahme auf die beigefügten Figuren:
- Fig. 1: zeigt eine schematische Querschnittansicht eines erfindungsgemäßen Schneckengetriebes in einer ersten Ausführungsform und eines dieses umfassenden Hilfsantriebs.
- Fig. 2: zeigt eine schematische Querschnittansicht eines erfindungsgemäßen Schneckengetriebes in einer zweiten Ausführungsform und eines dieses umfassenden Hilfsantriebs.
- Fig. 3: zeigt eine schematische Querschnittansicht eines erfindungsgemäßen Schneckengetriebes in einer dritten Ausführungsform.
- Fig. 4: zeigt eine axiale Schnittansicht des Schneckenrads des Schneckengetriebes nach Fig. 2 oder 3.
- Fig. 5: zeigt eine isometrische Ansicht eines Schneckengetriebes nach einer der Fig. 1 bis 3.
- Fig. 6: zeigt eine schematische Seitenansicht eines Fahrrads mit einem erfindungsgemäßen Hilfsantrieb.
- Fig. 7: zeigt eine schematische Unteransicht des Tretlagerbereichs des Fahrrads nach Fig. 6.

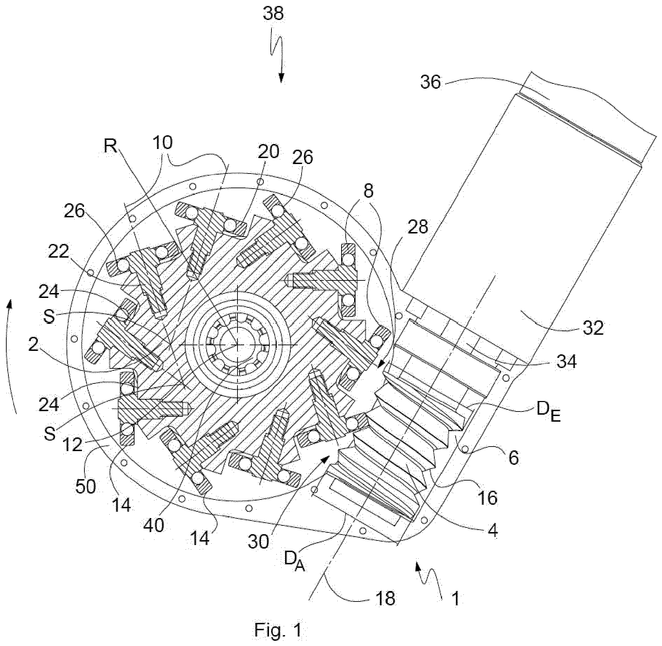

Fig. 1 zeigt ein erfindungsgemäßes Schneckengetriebe 1 sowie einen dieses Getriebe umfassenden Hilfsantrieb in einer Querschnittansicht. Das Schneckengetriebe 1 umfasst ein Schneckenrad 2 und eine Schnecke 4. Die Schnecke 4 weist zumindest einen schraubenförmigen Gang 6 auf. Der Gang 6 verläuft schraubenförmig entlang der Mantelfläche der Schnecke 4, vorzugsweise von einem Ende der Schnecke 4 bis zum anderen Ende der Schnecke 4. Das Schneckenrad 2 umfasst eine Mehrzahl von entlang eines Umfangs des Schneckenrads 2 angeordneten Laufrollen 8. Die Laufrollen 8 sind dazu eingerichtet, mit dem Gang 6 der Schnecke 4 einzugreifen. Jede Laufrolle 8 weist eine Laufrollenachse 10 auf, um die sie drehbar am Schneckenrad 2 gelagert ist. Das Schneckenrad 2 weist wiederum eine Schneckenradachse 12 auf, um die es drehbar gelagert ist. Die Schneckenradachse 12 erstreckt sich in Fig. 1 senkrecht zur Zeichenebene.

Erfindungsgemäß schneiden die Laufrollenachsen 10 die Schneckenradachse 12 nicht. Vielmehr schneiden sich die Laufrollenachsen 10 zweier benachbarter Laufrollen 8 in einem Schnittpunkt S, der beabstandet zur Schneckenradachse 12 angeordnet ist, also nicht auf der Schneckenradachse 12 liegt. Anders ausgedrückt sind die Laufrollenachsen 10 schräg zu einer radialen Achse R des Schneckenrads 2 ausgerichtet. Die radiale Achse R erstreckt sich exakt in radialer Richtung des Schneckenrads 2.

Die Schnecke 4 weist eine Schneckenachse 18 auf, um die sie sich dreht. In einem Querschnitt entlang der Schneckenradachse 12 ist eine Projektion der Schneckenachse 18 senkrecht zur Schneckenradachse 12 ausgerichtet.

Jede Laufrolle 8 weist ferner eine umlaufende Lauffläche 14 auf. Die Schnecke 4 weist eine Kontaktfläche 16 auf, die durch eine Flanke des schraubenförmigen Gangs 6 der Schnecke 4 gebildet wird. Die Lauffläche 14 einer mit der Schnecke 4 in Eingriff stehenden Laufrolle 8 und die Kontaktfläche 16 der Schnecke 4 berühren einander. Genauer rollt die Lauffläche 14 einer mit der Schnecke 4 in Eingriff stehenden Laufrolle 8 auf der Kontaktfläche 16 der Schnecke 4 ab.

Dreht sich die Schnecke 4 um die Schneckenachse 18, wird die Drehbewegung aufgrund des Eingriffs der Laufrollen 8 mit der Schnecke 4 auf das Schneckenrad 2 übertragen. Die Übersetzung zwischen der Schnecke 4 und dem Schneckenrad 2 hängt dabei im Wesentlichen vom Durchmesser der Schnecke 4, dem Durchmesser des Schneckenrads 2 sowie der Steigung der Windungen des Gangs 6 der Schnecke 4 ab. Der Fachmann ist mit der Ermittlung der Übersetzung von Schneckengetrieben sowie der Auslegung der dafür maßgeblichen Faktoren vertraut, weshalb hierauf nicht im Detail eingegangen wird.

Wie aus Fig. 1 ersichtlich ist, bewirkt die Schrägstellung der Laufrollenachsen 10 bezüglich der radialen Achse R, dass die Laufflächen 14 in einem Teil ihres Umfangs bezüglich des Schneckenrads 2 nach außen gerichtet sind. Dieser nach außen gerichtete Teil der Laufflächen 14 der Laufrollen 8 berührt die Kontaktfläche 16 der Schnecke 4, wenn die Laufrolle 8 mit der Schnecke 4 in Eingriff steht. Dadurch ist es möglich, die Laufrollen 8 sehr eng nebeneinander entlang des Umfangs des Schneckenrads 2 anzuordnen. In der dargestellten Ausführungsform sind die Laufrollen 8 schuppenförmig angeordnet. Zwei aneinander angrenzende Laufrollen 8 können sich in radialer Richtung des Schneckenrads 2 auch teilweise überschneiden. Trotzdem bleibt ein nach außen gerichteter Teil der Lauffläche 14 jeder Laufrolle 18 frei zugänglich, um mit der Schnecke 4 einzugreifen.

Die Laufrollen 14 müssen sich in radialer Richtung des Schneckenrads 2 jedoch nicht überschneiden, sondern können auch mehr oder weniger beabstandet zueinander angeordnet sein. Auch dabei kann der Abstand zwischen den Laufrollen 8 jedoch minimiert werden.

Bei im Wesentlichen radial bezüglich des Schneckenrads 2 ausgerichteten Laufrollenachsen 10 wären die Laufflächen 14 zwei aneinander angrenzender Laufrollen 8 einander zugewandt. Zwei aneinander angrenzende Laufrollen 8 müssten dann entlang des Umfangs des Schneckenrads so weit voneinander beabstandet sein, dass die Schnecke 4 zwischen den zwei aneinander angrenzenden Laufrollen 8 mit den Laufrollen 8 eingreifen kann, wodurch der erforderliche Bauraum erheblich vergrößert würde.

Folglich wird durch die zuvor definierte Schrägstellung der Laufrollenachsen 10 bezüglich der radialen Achse R des Schneckenrads 2 erreicht, dass bei selbem Umfang bzw. Durchmesser des Schneckenrads 2 mehr Laufrollen 8 entlang des Umfangs des Schneckenrads 2 verteilt angeordnet werden können als bei radialer Ausrichtung der Laufrollenachsen 10. Alternativ kann dieselbe Anzahl von Laufrollen 8 bei einem kleineren Schneckenraddurchmesser entlang des Umfangs des Schneckenrads 2 angeordnet werden, während bei radialer Ausrichtung der Laufrollenachsen 10 für dieselbe Anzahl von Laufrollen 8 ein Schneckenrad 2 größeren Durchmessers notwendig wäre. Dadurch können der für das Schneckengetriebe 1 benötigte Bauraum sowie das Massenträgheitsmoment des Schneckenrads 2 wesentlich reduziert werden.

Dies bietet vor allem dann Vorteile, wenn der für das Schneckengetriebe 1 verfügbare Bauraum klein ist oder durch andere konstruktive Faktoren eingeschränkt ist. Soll das Schneckengetriebe 1 beispielsweise als Tretlagergetriebe eines E-Bikes verwendet werden, ist der zur Verfügung stehende Bauraum im Bereich des Tretlagers eines Fahrrads gering und durch den Q-Faktor beschränkt. Durch die schmale Bauform ist das erfindungsgemäße Schneckengetriebe dafür also besonders gut geeignet.

In der in Fig. 1 dargestellten Ausführungsform umfasst jede Laufrolle 8 einen Laufrollenkörper 20. Weiterhin ist eine Achse 22 vorgesehen, die die Laufrollenachse 10 definiert und die beispielsweise als Schraube, Stift, Hülse oder Bolzen ausgebildet sein kann. Die Achse 22 ist im Schneckenrad 2 gelagert und ragt aus diesem hervor, um einen Abschnitt zur Aufnahme des Laufrollenkörpers 20 zu bilden.

Vorzugsweise ist die Achse 22 drehfest im Schneckenrad 2 aufgenommen, beispielsweise in dieses eingepresst. Die Achse 22 kann auch durch zusätzliche Mittel, beispielsweise Schrauben, die in die Stirnflächen des Schneckenrads 2 eingebracht werden, oder durch Formschluss drehfest im Schneckenrad 2 gelagert sein. In der dargestellten Ausführungsform sind entlang des Umfangs Absätze 24 in das Schneckenrad 2 eingebracht, die jeweils eine Bohrung zur Aufnahme einer Achse 22 einer Laufrolle 8 aufweisen. Das Schneckenrad 2 bekommt dadurch eine gezackte Kontur.

Auf den aus dem Schneckenrad 2 herausragenden Teil der Achse 22 ist der Laufrollenkörper 20 gelagert. Vorzugsweise erfolgt die Lagerung des Laufrollenkörpers 20 auf der Achse 22 mittels eines Wälzlagers 26. Das Wälzlager 26 ist bevorzugt ein Nadellager, da dieses einen geringen Bauraum benötigt und somit nah an der Laufrollenachse 10 angeordnet sein kann. Zudem kann es sehr hohe dynamische, wie auch statische Kräfte in radialer Richtung aufnehmen.

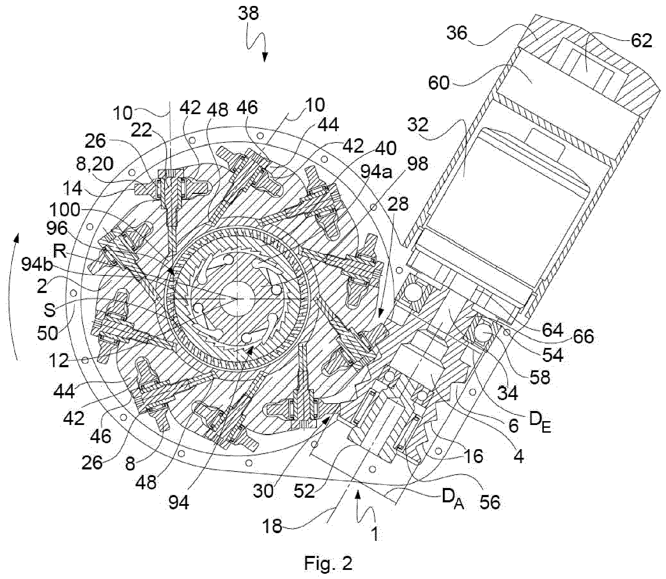

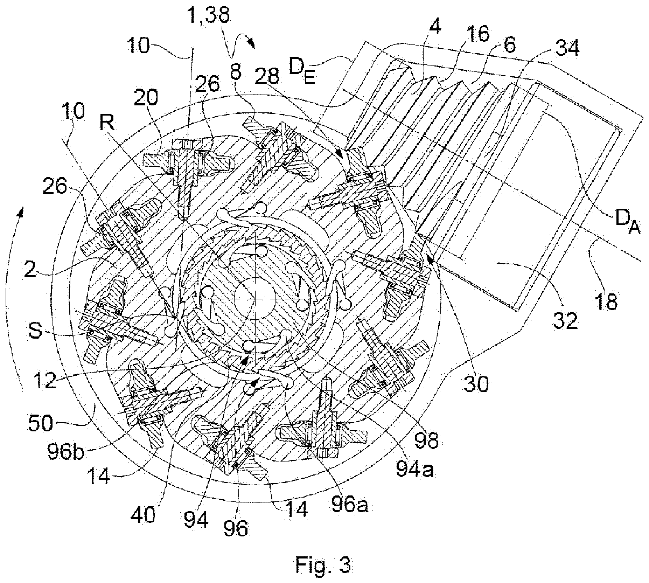

Auch für die Ausbildung der Schnecke 4 sind verschiedene Ausführungsformen denkbar. Insbesondere kann die Schnecke 4 einen im Wesentlichen konstanten Durchmesser über ihre Länge in Richtung der Schneckenachse 18 aufweisen, wie in Fig. 1 und 2 dargestellt. Die Schnecke 4 kann aber auch derart ausgebildet sein, dass sich der Durchmesser der Schnecke 4 in axialer Richtung entlang der Schneckenachse 18 verändert, wie in Fig. 3 dargestellt. Wie bei einer Globoidschnecke kann die Schnecke 4 an einem Einlauf einen großen Durchmesser aufweisen, der sich in axialer Richtung zum Auslauf hin zunächst verringert und dann bevorzugt symmetrisch bis hin zum Auslauf wieder vergrößert. Dadurch kann insbesondere die Länge, über die das Schneckenrad mit der Schnecke in Eingriff steht, verlängert werden.

Die Schnecke 4 weist an einem Einlauf 28 einen Durchmesser D_{E} und an einem Auslauf 30 einen Durchmesser D_{A} auf. Der Einlauf 28 ist an dem Ende der Schnecke 4 gebildet, an dem Laufrollen 8 in Drehrichtung des Schneckenrads 2, die durch einen Pfeil gekennzeichnet ist, zuerst in Eingriff mit der Schnecke 4 treten. Die Laufrollen 8 werden dann weiter in Drehrichtung des Schneckenrads 2 in stetigem Eingriff mit der Schnecke 4 bewegt, bis sie am Auslauf 30 den Kontakt zur Schnecke 4 verlieren.

Die Schnecke 4 gemäß der Ausführungsform nach Fig. 1 weist einen im Wesentlichen konstanten Durchmesser auf. Der Durchmesser D_{E} am Einlauf 28 entspricht in dieser Ausführungsform im Wesentlichen dem Durchmesser D_{A} am Auslauf 30, so dass sich der Durchmesser der Schnecke 4 in axialer Richtung der Schnecke 4 zwischen dem einen Ende 28 und dem anderen Ende 30 in axialer Richtung im Wesentlichen nicht verändert. Abweichungen von einem konstanten Durchmesser ergeben sich nur durch die Geometrie des Gangs 6, insbesondere durch die sich in axialer Richtung bezüglich der Schneckenachse 18 unter Umständen verändernde Steigung der Windungen in der Schnecke 4. Es ist jedoch auch der Einsatz einer Schnecke 4 denkbar, deren Durchmesser sich in axialer Richtung verändert, wie in Fig. 3 dargestellt.

Das Schneckengetriebe 1 kann bedingt durch die Schrägstellung der Laufrollenachsen 10 bezüglich der radialen Achse R des Schneckenrads 2 sowie durch die Gestalt der Schnecke 4, insbesondere deren Gang 6, derart ausgebildet sein, dass es nur eine Wirkrichtung aufweist. D. h., dass eine Drehbewegung bzw. ein Drehmoment nur in eine Drehrichtung übertragen werden kann. Wird das Schneckengetriebe 1 beispielsweise als Getriebe in einem E-Bike eingesetzt, ist eine Wirkrichtung zur Übertragung eines Drehmoments von einem Motor auf eine Ausgangswelle, auf der z. B. ein Kettenblatt angeordnet ist, völlig ausreichend. Eine einfachere Konstruktion ist die Folge, und die Dimensionierung sowie die Auslegung des Schneckengetriebes 1 können dadurch optimal an die gegebenen Anforderungen angepasst werden und unterliegen weniger Einschränkungen hinsichtlich der Gestaltung von Schneckenrad 2 und Schnecke 4.

Im allgemeinen Maschinen- und Anlagenbau ist hingegen ein Schneckengetriebe mit nur einer Wirkrichtung in der Regel uninteressant, da sich dadurch die zu übertragende Drehbewegung und somit die durch das Getriebe bewirkte Stellbewegung nicht umkehren lässt.

Es ist aber auch möglich, dass erfindungsgemäße Schneckengetriebe 1 derart auszulegen, dass es zwei Wirkrichtungen aufweist und somit ein Drehmoment in beide Drehrichtungen übertragen kann.

Neben dem Schneckengetriebe 1 sind in Fig. 1 weiterhin ein Motor 32 mit einer Antriebswelle 34 sowie ein Energiespeicher 36 schematisch dargestellt. Der Energiespeicher 36 ist mit dem Motor 32 elektrisch verbunden, um ihn mit Energie zu versorgen. Der Motor ist als Elektromotor, vorzugsweise als bürstenloser Gleichstrommotor ausgebildet und der Energiespeicher ist bevorzugt ein wiederaufladbarer Akku. Die elektrische Verbindung zwischen dem Energiespeicher und dem Motor kann beispielsweise durch eine herkömmliche Steckverbindung hergestellt werden. Der Motor umfasst ferner eine Steuerelektronik, die in Fig. 1 nicht dargestellt ist.

Ein erfindungsgemäßer Hilfsantrieb 38 für ein Fahrzeug, insbesondere für ein Fahrrad, umfasst einen Motor 32 mit Antriebswelle 34, einen Energiespeicher 36, der mit dem Motor 32 elektrisch verbunden ist, eine Ausgangswelle 40 zum Antreiben des Fahrzeugs und ein Schneckengetriebe 1. Das Schneckengetriebe 1 umfasst eine Schnecke 4 und ein Schneckenrad 2, wobei die Schnecke 4 des Schneckengetriebes 1 mit der Antriebswelle 34 des Motors 32 gekoppelt ist, das Schneckenrad 2 mit der Ausgangswelle 40 gekoppelt ist und die Schnecke 4 zumindest einen schraubenförmigen Gang 6 aufweist. Insbesondere umfasst das Schneckenrad 2 eine Mehrzahl von entlang eines Umfangs des Schneckenrads 2 verteilte Laufrollen 8, die dazu eingerichtet sind, mit dem Gang 6 der Schnecke 4 einzugreifen.

Das Schneckengetriebe 1 des erfindungsgemäßen Hilfsantriebs 38 ist, wie dargestellt, bevorzugt als erfindungsgemäßes Schneckengetriebe 1 ausgebildet. Beim erfindungsgemäßen Hilfsantrieb 38 können die Laufrollenachsen 10 jedoch auch radial bezüglich des Schneckenrads 2 ausgerichtet sein. Gegenüber herkömmlichen Schneckengetrieben bietet allein das Vorsehen von Laufrollen 8 entlang des Umfangs des Schneckenrads 2 den Vorteil, dass die Reibungsverluste zwischen Schnecke 4 und Schneckenrad 2 minimiert werden, während zugleich große Übersetzungen ermöglicht werden.

Die nachfolgende Beschreibung beschränkt sich auf die bevorzugte Ausführungsform, bei der der Hilfsantrieb 38 ein erfindungsgemäßes Schneckengetriebe 1 umfasst. Für den Fachmann ersichtlich ist, dass ohne Weiteres auch ein Schneckenrad mit Laufrollen eingesetzt werden kann, deren Laufrollenachsen radial bezüglich des Schneckenrads ausgerichtet sind.

Die Schnecke 4 ist mit der Antriebswelle 34 des Motors 32 gekoppelt. Dies kann auf unterschiedliche Weisen erfolgen. Beispielsweise kann die Schnecke 4 auf der Antriebswelle 34 drehfest mittels bekannter Welle-Nabe-Verbindungen gelagert sein. Die Schnecke 4 kann auch eine Schneckenwelle umfassen, die vom Motor 32 über eine weitere Getriebestufe angetrieben wird. Die Schnecke 4 kann auch integral mit der Antriebswelle 34 ausgebildet sein. Die Schneckenwelle entspricht dann der Antriebswelle 34.

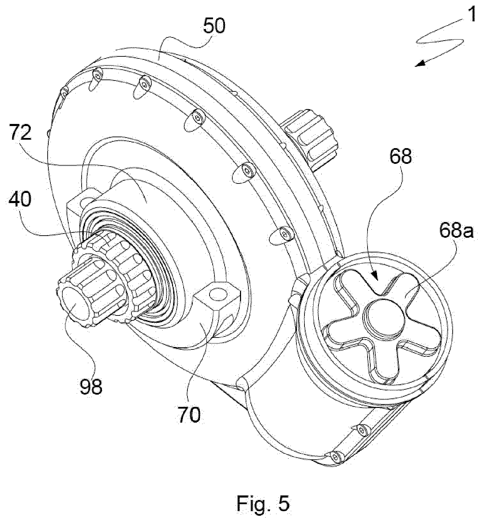

Die Lagerung der Schnecke 4 auf der Antriebswelle 34 bzw. die Ausbildung der Schnecke 4 und der Schneckenwelle können erfolgen wie bei herkömmlichen Schneckengetrieben. Die Schneckenwelle und die Antriebswelle 34 können aber auch mittels einer Rotationsübertragungseinrichtung verbunden sein, wie unter Bezugnahme auf Fig. 5 beschrieben ist.

Auf diese Art und Weise wird ein Drehmoment vom Motor 32 mittels des Schneckengetriebes 1 auf die Ausgangswelle 40 übertragen. Hierzu ist das Schneckenrad 2 auf der Ausgangswelle 40 gelagert. Das Schneckenrad 2 kann auf der Ausgangswelle 40 in beide Richtungen drehfest um die Schneckenradachse 12 gelagert sein. Das Schneckenrad 2 kann aber auch in eine Richtung frei drehbar auf der Ausgangswelle 40 gelagert sein. In einer bevorzugten Ausführungsform ist der Hilfsantrieb 38 für ein Fahrrad vorgesehen und das Schneckenrad 2 ist auf der Ausgangswelle 40 mittels eines Freilaufs gelagert, wie in Fig. 2 und 3 dargestellt.

Es versteht sich, dass die Beschreibung einer bevorzugten Ausführungsform gilt und dem Fachmann verschiedenste Alternativen der Konstruktion und Auslegung der hierin beschriebenen Komponenten ersichtlich sind, wie beispielsweise anhand der Ausführungsformen nach Fig. 2 bis Fig. 4 angedeutet ist. Insbesondere sind verschiedenste Ausführungen der Laufrollen 8 selbst, deren Lagerung am Schneckenrad 2 sowie des Zusammenwirkens mit der Schnecke 4 denkbar, solange die erfindungsgemäße Lehre berücksichtigt wird.

In Fig. 2 sind eine alternative Ausführungsform des erfindungsgemäßen Schneckengetriebes 1 sowie eines Hilfsantriebs 38, der dieses Schneckengetriebe 1 umfasst, dargestellt. Elemente, die denen der Ausführungsform nach Fig. 1 entsprechen, sind mit denselben Bezugszeichen gekennzeichnet.

Das Schneckengetriebe 1 nach Fig. 2 unterscheidet sich von dem nach Fig. 1 im Wesentlichen in der Ausführung der Laufrollen 8, deren Lagerung im Schneckenrad 2 sowie in der Ausführung der Schnecke 4 und der Lagerung des Schneckenrads 2. Die Beschreibung zu Fig. 2 betrifft daher im Wesentlichen die Unterschiede zu der Ausführungsform nach Fig. 1. Im Übrigen sind die zu Fig. 1 beschriebenen Merkmale und Vorteile unmittelbar auf die Ausführungsform nach Fig. 2 übertragbar und können mit Merkmalen dieser Ausführungsform kombiniert werden. Um Redundanzen zu vermeiden, wird auf eine gesonderte Beschreibung gleicher Merkmale und Eigenschaften verzichtet.

Im Allgemeinen können die Laufrollen 8 des erfindungsgemäßen Schneckengetriebes 1 im Wesentlichen tonnenförmig, zylindrisch, ringförmig oder scheibenförmig ausgebildet sein. Andere geeignete Ausführungsformen sind dem Fachmann ohne Weiteres ersichtlich.

In der Ausführungsform nach Fig. 1 sind die Laufrollen 8 im Wesentlichen zylindrisch ausgebildet, wobei die Mantelfläche des Zylinders die Lauffläche 14 der Laufrollen 8 bildet. Der Zylinder ist dadurch gekennzeichnet, dass die Höhe der Laufrollen 8 in Richtung der Laufrollenachse 10 im Verhältnis zum Durchmesser der Laufrolle 8 größer ist, als dies beispielsweise bei einer scheibenförmigen Laufrolle 8 der Fall ist.

Die Laufrollen 8 des Schneckengetriebes 1 gemäß der Ausführungsform nach Fig. 2 sind im Wesentlichen scheibenförmig ausgebildet. D. h., dass ihre Höhe in Richtung der Laufrollenachse 10 im Verhältnis zum Durchmesser der Laufrollen 8 kleiner ist als bei den Laufrollen 8 nach Fig. 1. Dies bringt die Vorteile mit sich, dass zum einen für die Lagerung der Laufrollen 8 am Schneckenrad 2 weniger Bauraum benötigt wird. Zum anderen weisen die scheibenförmigen Laufrollen 8 eine geringere Massenträgheit auf, was wiederum vorteilhaft für die Beschleunigung der Laufrollen 8 im Eingriff mit der Schnecke 4 ist.

Die Laufrollen 8 umfassen auch hier einen Laufrollenkörper 20, der mittels eines Wälzlagers 26 auf einer Achse 22 gelagert ist. Wie dargestellt, kann die Achse 22 auch durch eine Schraube mit Außengewinde gebildet sein und die Öffnung 48 weist ein entsprechendes Innengewinde auf. An der Achse 22 kann ein zylindrischer Abschnitt vorgesehen sein, der sich zur Aufnahme des Wälzlagers 26 eignet. Es kann aber auch eine Hülse 27 zwischen der Achse 22 und dem Wälzlager 26 vorgesehen sein.

Im Gegensatz zu der Ausführungsform nach Fig. 1 sind die Achsen 22 der Laufrollen 8 in der Ausführungsform nach Fig. 2 an beiden axialen Enden am Schneckenrad 2 gelagert bzw. abgestützt. Somit ist jede Laufrolle 8 in axialer Richtung bezüglich der Laufrollenachse 10 beidseitig des Rollenkörpers 20 im Schneckenrad 2 gelagert. Kräfte, die beim Eingriff einer Laufrolle 8 mit der Schnecke 4 auf die Laufrolle 8 wirken, werden dadurch symmetrisch an beiden Achsenenden in das Schneckenrad 2 eingeleitet. Daraus folgt eine gleichmäßigere Belastung, und eine Hebelwirkung auf die Lagerstelle wird minimiert.

Die beidseitige Lagerung der Laufrollen 8 wird dadurch verwirklicht, dass Ausnehmungen 42 in das Schneckenrad 2 eingebracht werden, die sich im Wesentlichen senkrecht zu den vorgesehenen Laufrollenachsen 10 in das Schneckenrad 2 hinein erstrecken. Um eine möglichst einfache Fertigung zu ermöglichen, durchsetzen die Ausnehmungen 42 das Schneckenrad 2 vorzugsweise in axialer Richtung bezüglich der Schneckenradachse 12, in Fig. 2 senkrecht zur Zeichenebene. Das Schneckenrad 2 bildet dadurch Aufnahmen aus, die im Wesentlichen C-förmig um jede Ausnehmung 42 ausgebildet sind.

In jede Ausnehmung 42 ist eine Laufrolle 8 eingesetzt. Die Kontur der Ausnehmungen 42 kann an die Kontur der Laufrollen 8 angepasst sein, wie dargestellt. Die Kontur der Ausnehmungen 42 kann aber auch einfach der Kontur der Werkzeuge entsprechen, mit denen die Ausnehmungen 42 in das Schneckenrad 2 eingebracht werden.

Eine Laufrolle 8 ist dabei höchstens so tief in eine Ausnehmung 42 eingefügt, dass zumindest die Lauffläche 14 dieser Laufrolle 8 auf der vom Schneckenrad 2 abgewandten Seite der Laufrolle 8 so weit aus dem Schneckenrad 2 bzw. der Ausnehmung 42 herausragt, dass ein Eingriff der Laufrolle 8 mit der Schnecke 4 ermöglicht wird, ohne dass das Schneckenrad 2 mit der Schnecke 4 kollidiert.

Durch das Einbringen der Ausnehmungen 42 in das Schneckenrad 2 verbleibt auf der bezüglich der Schneckenradachse 12 nach außen gerichteten Seite jeder Ausnehmung 42 ein Steg 44, der einen Teil der Mantelfläche des Schneckenrads 2 umfasst und integral mit dem Schneckenrad 2 ausgebildet ist.

In den Steg 44 kann eine Durchgangsöffnung zur Aufnahme eines axialen Endes der Achse 22 der Laufrolle 8 eingebracht sein. Die Durchgangsöffnung ist dann koaxial zur vorgesehenen Laufrollenachse 10 ausgebildet. In entsprechender Verlängerung zur Durchgangsöffnung kann ebenfalls koaxial zur Laufrollenachse 10 eine Öffnung 48 im Schneckenrad 2 auf der anderen Seite der Ausnehmung 42 eingebracht, um das gegenüberliegende axiale Ende der Achse 22 aufzunehmen. Somit ist die Achse 22 beidseitig des Laufrollenkörpers 20 in einer solchen Durchgangsöffnung und der Öffnung 48 im Schneckenrad 2 gelagert. Die Öffnung 48 kann als Bohrung, vorzugsweise Gewindebohrung ausgebildet sein.

In der dargestellten Ausführungsform endet der Steg 44 im Bereich der Achse 22, genauer im Bereich des über den Laufrollenkörper 20 hinausgehenden Abschnitts der Achse 22. Dieser Abschnitt der Achse 22 kann beispielsweise durch einen Schraubenkopf gebildet werden. An einem freien Ende 46 weist der Steg eine Lagerfläche auf. Diese Lagerfläche umgibt die Achse 22 zumindest teilweise, sodass die Achse 22 am Steg 44 abgestützt ist. Die Abstützung kann auch nur in einem Zustand erfolgen, in dem eine Radialkraft auf die entsprechende Laufrolle wirkt.

Es versteht sich, dass verschiedene Lagerungsmöglichkeiten denkbar sind. Beispielsweise können auch die Laufrollen 8 nach Fig. 2 ähnlich den Laufrollen 8 nach Fig. 1 nur einseitig gelagert sein, oder es wird ein zusätzliches Bauteil vorgesehen, das den Steg 44 umfasst und mit dem Schneckenrad 2 verbunden, beispielsweise verschraubt wird. Ebenso kann eine Laufrolle 8 auf einem integral mit dem Schneckenrad 2 ausgebildeten Vorsprung gelagert sein.

Die Laufflächen 14 der Laufrollen 8 und die Kontaktfläche 16 der Schnecke 4 können komplementär zueinander gekrümmt sein. Bevorzugt ist die Lauffläche 14 einer Laufrolle 8 konvex gekrümmt und die Kontaktfläche 16 der Schnecke 4 ist konkav gekrümmt. Mit anderen Worten ist die Lauffläche 14 einer Laufrolle 8 in der Schnittansicht radial nach außen gewölbt und die Kontaktfläche 16 ist in der axialen Schnittansicht bezüglich des Schneckenkörpers 4 nach innen gewölbt. Es ist natürlich auch denkbar, dass die Laufflächen 14 konkav gekrümmt sind und die Kontaktfläche 16 konvex gekrümmt ist oder dass andere Krümmungen oder komplementäre Konturen verwendet werden.

Um eine Überbestimmung der Laufrollenlagerung zu vermeiden, wenn die Laufrollen 8 in Eingriff mit der Schnecke 4 stehen, sind die Laufrollen 8 bevorzugt mit axialem Spiel im Schneckenrad gelagert. Durch eine komplementäre Krümmung der Laufflächen 14 der Laufrollen 8 und der Kontaktfläche 16 der Schnecke 4, werden die Laufrollen 8 in axialer Richtung bezüglich der Laufrollenachsen 10 zentriert, wenn sie in Eingriff mit der Schnecke 4 stehen.

Es versteht sich, dass in der Ausführungsform nach Fig. 2 die Laufflächen 14 der Laufrollen 8 sowie die Kontaktfläche 16 der Schnecke 4 im Wesentlichen auch eben ausgebildet sein können, wie dies bei der Ausführungsform nach Fig. 1 der Fall ist. Andersherum können auch die Laufflächen 14 der Laufrollen 8 sowie die Kontaktfläche 16 der Schnecke 4 nach Fig. 1 komplementär zueinander gekrümmt sein.

Das Schneckenradgetriebe 1 kann in all seinen Ausführungsformen weiterhin ein Gehäuse 50 aufweisen, das das Schneckenrad 2 und die Schnecke 4 umgibt. Vorzugsweise ist das Gehäuse 50 zumindest teilweise möglichst dünnwandig ausgebildet, um Gewicht und Bauraum einzusparen. Das Gehäuse 50 kann zweiteilig ausgebildet sein, um eine einfache Montage des Schneckenrads 2 und der Schnecke 4 zu ermöglichen. Das Gehäuse 50 kann weiterhin Lagerstellen aufweisen, um das Schneckenrad 2 innerhalb des Gehäuses 50 zu positionieren und die Schnecke 4 im Gehäuse 50 zu lagern. Das Gehäuse 50 kann aber auch auf der das Schneckenrad 2 tragenden Ausgangswelle 40 gelagert sein.

Beispielsweise umfasst das Gehäuse 50 zwei Lagersitze 52, 54 zur Aufnahme von Lagern 56, 58. Vorzugsweise sind diese Lager 56, 58 als Radiallager ausgebildet, um die Schnecke 4 drehbar im Gehäuse 50 aufzunehmen.

Das Gehäuse 50 ist vorzugsweise staub- und flüssigkeitsdicht ausgebildet, um eine Beeinflussung durch Fremdkörper wie Staub und Schmutz zu unterbinden und ggf. eine Schmierung der Komponenten, die im Gehäuse 50 enthalten sind, zu ermöglichen. Bevorzugt ist das Gehäuse 50 aus (Leicht-) Metall gebildet. Das Gehäuse 50 kann jedoch auch aus Kunststoff oder Karbon gebildet sein.

Ein erfindungsgemäßer Hilfsantrieb 38 kann auch das Schneckengetriebe 1 nach Fig. 2 umfassen, wobei analog zur Ausführungsform nach Fig. 1 ebenfalls ein Motor 32 mit einer Antriebswelle 34 sowie ein Energiespeicher 36 vorgesehen sind. Zudem ist in Fig. 2 die Steuerelektronik 60 des Motors 32 angedeutet, mittels derer die Leistungsabgabe und Drehzahl des Motors sowie die Energiezufuhr durch den Energiespeicher 36 geregelt werden können. Geeignete Steuerelektroniken 60 sind dem Fachmann bekannt. Die Steuerelektronik 60 kann zudem mit einem Bedienelement verbunden sein, dass einem Anwender das Steuern des Motors 32 ermöglicht. Die Verbindung zwischen dem Energiespeicher 36 und dem Motor 32 einschließlich der Steuerelektronik 60 erfolgt durch eine lösbare Verbindung, insbesondere durch eine Steckverbindung.

Es ist bevorzugt, dass der Hilfsantrieb 38 modular aufgebaut ist. Insbesondere ist es bevorzugt, dass sich der Motor 32 vom Getriebe 1 und vom Energiespeicher 36 einfach trennen und wieder mit diesen verbinden lässt. Auf diese Weise können die einzelnen Baugruppen zur Wartung oder bei Defekt einfach ausgetauscht werden. Auch können der Motor 32 und/oder der Energiespeicher 36 einfach an unterschiedliche Leistungsanforderungen angepasst werden.

In einer bevorzugten Ausführungsform sind der Energiespeicher 36 und der Motor 32 hierzu mittels einer ersten lösbaren Verbindung 62 verbunden und der Motor 32 und das Schneckengetriebe 1 sind mittels einer zweiten lösbaren Verbindung 64 miteinander verbunden.

Die erste lösbare Verbindung 62 zwischen dem Energiespeicher 36 und dem Motor 32 (einschließlich der Steuerelektronik 60) ist vorzugsweise als herkömmliche Steckverbindung ausgebildet. Die erste lösbare Verbindung 62 kann derart ausgebildet sein, dass sie den Energiespeicher 36 am Motor 32 trägt. Die erste lösbare Verbindung 62 kann aber auch nur derart ausgebildet sein, dass sie nur eine elektrische Verbindung zwischen dem Energiespeicher 36 und dem Motor 32 herstellt und der Energiespeicher 36 durch andere Elemente am Fahrzeug gehalten wird.

Die zweite lösbare Verbindung 64 zwischen dem Motor 32 und dem Schneckengetriebe 1 ist vorzugsweise als Welle-Nabe-Verbindung ausgebildet. Diese Verbindung sollte drehfest ausgebildet sein, um das Übertragen eines Drehmoments möglichst ohne Verluste zu ermöglichen, während die Komponenten axial zueinander verschiebbar sind.

In den Ausführungsformen nach Fig. 2 und 3 umfasst das Schneckengetriebe 1 weiterhin einen ersten Freilauf 94 und einen zweiten Freilauf 96. Aufgrund der Freiläufe 94, 96 wird ein Drehmoment nur in eine Drehrichtung übertragen, während bei einer Drehung in die entgegengesetzte Drehrichtung kein Drehmoment übertragen wird. Es kann aber auch nur einer der beiden Freiläufe vorgesehen werden, während der andere durch eine Welle-Nabe-Verbindung oder eine integrale Ausbildung der betreffenden Komponenten ersetzt wird.

Dies ist insbesondere bei der Verwendung des Getriebes 1 an einem Fahrrad vorteilhaft, wenn die Ausgangswelle 40 zum Antreiben des Fahrrads eingerichtet ist, indem auf ihr z. B. eines oder mehrere Kettenblätter gelagert sind. Auf die Ausgangswelle 40 ist dann einerseits eine Antriebsbewegung bzw. ein Drehmoment von einer Tretkurbel zu übertragen. Zum anderen ist eine Antriebsbewegung bzw. ein Drehmoment vom Motor 32 des Hilfsantriebs 38 auf die Ausgangswelle 40 zu übertragen. Es ist aber auch wünschenswert, die Ausgangswelle 40 zumindest in einer Drehrichtung zu entkoppeln, um z. B. ein Rückwärtstreten zu ermöglichen. Es versteht sich, dass auch andere Anwendungsfälle das Vorsehen von zwei Freiläufen 94, 96 erfordern können.

In der in Fig. 2 dargestellten Ausführungsform ist die Ausgangswelle 40 als Hohlwelle ausgebildet. Durch die Hohlwelle 40 erstreckt eine erste Welle 98 hindurch, die z. B. einer Kurbelwelle eines Fahrrads entspricht. Radial außerhalb der Ausgangswelle 40 umgibt diese eine zweite Welle 100, die auch als Hohlwelle ausgebildet ist und auf der das Schneckenrad 2 gelagert ist. Die zweite Welle 100 mittels einer Welle-Nabe-Verbindung mit dem Schneckenrad 2 verbunden sein, in das Schneckenrad 2 eingepresst sein oder integral mit den Schneckenrad 2 ausgebildet sein. Die erste Welle 98, die zweite Welle 100 und die Ausgangswelle 40 sind koaxial zueinander angeordnet.

Die Ausgangswelle 40 ist mit der ersten Welle 98 über den ersten Freilauf 94 gekoppelt. Der erste Freilauf 94 ist hier als Klinkenfreilauf ausgebildet und umfasst eine Mehrzahl von Sperrklinken 94a und entsprechende Zahnflanken 94b. Bevorzugt ist die Mehrzahl von Sperrklinken 94a entlang des Umfangs der ersten Welle 98 angeordnet und die Zahnflanken 94b sind entlang einer inneren Umfangsfläche der Ausgangshohlwelle 40 ausgebildet. Eine umgekehrte Ausbildung ist möglich. Details und Funktion eines Klinkenfreilaufs sind dem Fachmann bekannt.

Die Ausgangswelle 40 ist mit der zweiten Welle 100 bzw. mit dem Schneckenrad 2 über den zweiten Freilauf 96 verbunden. Der zweite Freilauf 96 ist hier als Klemmkörperfreilauf ausgebildet, wobei die Klemmkörper mit einer äußeren Umfangsfläche der Ausgangswelle 40 und mit einer inneren Umfangsfläche der zweiten Welle 100 eingreifen können. Auch die Details und Funktion eines Klemmkörperfreilaufs sind dem Fachmann bekannt.

Es versteht sich, dass für den ersten und den zweiten Freilauf jede beliebige Bauform von Freiläufen verwendet werden kann, soweit sie sich auf geeignete Art und Weise in das beschriebene System integrieren lassen.

Die Ausführungsform nach Fig. 3 unterscheidet sich von denen nach Fig. 1 und 2 Wesentliche in der Gestaltung der Schnecke 4 sowie des ersten und zweiten Freilaufs 94, 96. Auf die Unterschiede wird im Folgenden im Detail eingegangen, während im Übrigen auf die vorangehende Beschreibung verwiesen wird. Die Merkmale der unterschiedlichen Ausführungsformen lassen sich nahezu beliebig miteinander kombinieren.

Im dargestellten Beispiel ist auch der zweite Freilauf 96 als Klinkenfreilauf ausgebildet, der Sperrklinken 96a und Zahnflanken 96b umfasst, die wahlweise an einer aus der äußeren Umfangsfläche der Ausgangswelle 40 und der inneren Umfangsfläche der zweiten Welle 100 ausgebildet sind, die hier integraler Bestandteil der Schneckenrads 2 ist. Ein Drehmoment kann hier durch Drehung der Komponenten im Uhrzeigersinn übertragen werden. Bei einer Drehung der Komponenten entgegen dem Uhrzeigersinn wird kein Drehmoment übertragen. Auch hier sind alternative Ausführungen möglich.

Im Ausführungsbeispiel nach Fig. 3 verändert sich der Durchmesser der Schnecke 3 in axialer Richtung der Schnecke 4. Der Durchmesser D_{E} am Einlauf 28 ist in dieser Ausführungsform kleiner als der Durchmesser D_{A} am Auslauf 30, so dass der Durchmesser der Schnecke 4 in axialer Richtung der Schnecke 4 von einem Ende 28 zum anderen Ende 30 hin zunimmt. Durch eine derartige Gestaltung der Schnecke 4 wird erreicht, dass die Laufrollen 8 beim Eintritt in den Eingriff mit der Schnecke 4 am Einlauf 28 geringeren Beschleunigungssprüngen ausgesetzt sind. Die wird, wie eingangs beschrieben, durch die unterschiedlichen Umfangsgeschwindigkeiten der Schnecke im Bereich der unterschiedlichen Durchmesser D_{E} und D_{A} bedingt.

Die Laufrollen 8 werden am Einlauf 28 zunächst auf eine geringere Geschwindigkeit beschleunigt, sobald sie mit der Schnecke 4 eingreifen, und dann im weiteren Verlauf der Schnecke 4 bis hin zum Auslauf 30 auf eine höhere Geschwindigkeit beschleunigt.

Wie ferner zu erkennen ist, stehen bei der abgebildeten Ausführungsform zwei Laufrollen 8 des Schneckenrads 2 gleichzeitig mit der Schnecke 4 in Eingriff. Es ist daher möglich, z. B. jede zweite Laufrolle 8 wegzulassen und dennoch dieselbe Übersetzung mit dem Schneckengetriebe 1 zu erreichen. Auch in diesem Fall können kurzzeitig zwei Laufrollen 8 mit dem Schneckenrad 2 in Eingriff stehen, insbesondere beim Verlassen der einen und beim Eingang der nächsten Laufrolle 8. Dadurch können der Herstellungsaufwand, das Gewicht und die Kosten weiter reduziert werden.

Zudem ist zu erkennen, dass das Schneckenrad 2 bzw. die Laufrollen 8 nicht mit jeder Windung des Gangs 6 der Schnecke 4 in Eingriff stehen. Es ist beispielsweise ausreichend, wenn das Schneckenrad 2 in der Querschnittsbetrachtung nur mit jeder zweiten oder dritten Windung des Gangs 6 der Schnecke 4 in Eingriff steht. Genauso ist es aber möglich, dass das Schneckenrad 2 mit jeder Windung der Schnecke 4 in Eingriff steht.

Vom erfindungsgemäßen Hilfsantrieb 38 sind in Fig. 3 nur das Schneckengetriebe 1 und der Motor 32 gezeigt. Im Übrigen entspricht der Aufbau dem nach Fig. 1 und 2.

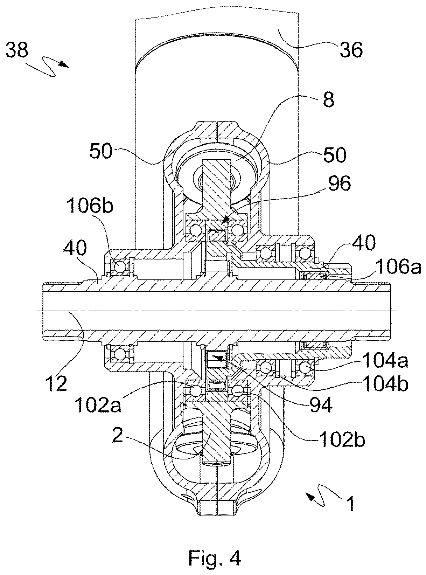

Fig. 4 zeigt eine axiale Schnittansicht durch das Schneckenrad 2 des Schneckengetriebes 1 nach Fig. 2 oder 3.

Das Schneckenrad 2 ist mittels Wälzlagern 102a, 102b im Gehäuse 50 gelagert. Die Ausgangswelle 40 ist ebenfalls mittels zweier Wälzlager 104a, 104b im Gehäuse 50 gelagert und die erste Welle 98 ist mittels zweier Wälzlager 106a, 106b im Gehäuse 50 gelagert. Die Wälzlager 102a, 102b, 104a, 104b, 106a, 106b sind vorzugsweise als Radiallager ausgebildet.

Die Ausgangswelle 40 umfasst zumindest einen Wellenabschnitt, der sich aus dem Gehäuse hinaus erstreckt und auf dem Mittel zur Kraftübertragung gelagert sein können, z. B. zumindest ein Kettenblatt oder aber Zahnräder eines weiteren Getriebes. Die Ausgangswelle 40 ist als Hohlwelle ausgebildet.

Radial innerhalb der Ausgangswelle 40 verläuft die erste Welle 98 vorzugsweise vollständig durch die Ausgangswelle 40 hindurch. Über die erste Welle 98 kann z. B. eine Kraft bzw. ein Drehmoment eingeleitet werden, z. B. mittels einer Tretkurbel eines Fahrrads. Die erste Welle 98 kann sich vollständig durch die Ausgangswelle 40 hindurch erstrecken und auf beiden Seiten des Gehäuses 50 aus diesem herausragen. Dies ist aber nicht zwingend erforderlich. Zwischen der ersten Welle 98 und der Ausgangswelle 40 ist der erste Freilauf 94 vorgesehen, der entsprechend den obigen Ausführungen ausgebildet sein kann.

Das Schneckenrad 2 umfasst eine Durchgangsöffnung, die um die Schneckenradachse 12 herum ausgebildet ist und die zweite Welle 100 bildet oder umfasst. Die Ausgangswelle 40 erstreckt sich zumindest teilweise in diese Durchgangsöffnung hinein. In der Durchgangsöffnung ist der zweite Freilauf 96 zwischen dem Schneckenrad 2 und der Ausgangswelle 40 vorgesehen, der entsprechend den obigen Ausführungen ausgebildet sein kann. Über das Schneckenrad 2 und den zweiten Freilauf 96 wird ein Drehmoment vom Motor 32 auf die Ausgangswelle 40 übertragen.

Das Schneckenrad 2, die Ausgangswelle 40 und die erste Welle 98 sind koaxial zur Schneckenradachse 12 ausgerichtet. Der erste und der zweite Freilauf 94, 96 sind vorzugsweise radial bezüglich der Schneckenradachse 12 in einer Ebene angeordnet.

Eine bevorzugte Ausführungsform der unter Bezugnahme auf Fig. 2 beschriebenen zweiten lösbaren Verbindung 64 zwischen dem Motor 32 und dem Schneckengetriebe 1 ist in Fig. 5 angedeutet. Vorzugsweise weist die Schnecke 4 eine Schneckenwelle 66 (siehe Fig. 2) auf und die Schneckenwelle 66 ist mittels einer Rotationsübertragungseinrichtung 68 mit der Antriebswelle 34 des Motors 32 verbunden. Die Rotationsübertragungseinrichtung 68 umfasst einen mit der Schneckenwelle 66 verbundenen Teil und einen mit der Antriebswelle 34 verbundenen Teil. Die beiden Teile der Rotationsübertragungseinrichtung 68 können integral mit der jeweiligen Welle ausgebildet sein oder als zusätzliches Element auf diesen gelagert sein.

In Fig. 5 ist der Teil 68a der Rotationsübertragungseinrichtung 68 ersichtlich, der der Schneckenwelle 66 zugeordnet ist. Der Teil 68a der Rotationsübertragungseinrichtung 68 weist eine Kontur auf, die bevorzugt nicht rotationssymmetrisch zur Schneckenachse ausgebildet ist. Insbesondere ist der Teil 68a der Rotationsübertragungseinrichtung als Vorsprung ausgebildet, der beispielsweise eine sternförmige Kontur aufweisen kann. Die Rotationsübertragungseinrichtung kann eine Kupplung sein, die beispielsweise sternförmig ausgebildet ist. Der hier nicht dargestellte Teil der Rotationsübertragungseinrichtung 68, der der Antriebswelle 34 zugeordnet ist, ist komplementär zum Teil 68a der Rotationsübertragungseinrichtung 68 ausgebildet. Die beiden Teile der Rotationsübertragungseinrichtung 68 können somit ineinander gesteckt werden. Es kommt dabei nicht darauf an, welcher Teil der Rotationsübertragungseinrichtung 68 einen Vorsprung oder eine komplementäre Aufnahme umfasst. Bevorzugt ist es jedoch, dass die beiden Teile der Rotationsübertragungseinrichtung 68 derart ausgebildet sind, dass sie ein Verdrehen relativ zueinander um die Schneckenachse bzw. Antriebsachse 34 unterbinden, während ein axiales Verschieben der Komponenten relativ zueinander möglich ist. Verschiedene alternative Ausführungsformen zur lösbaren Verbindung zweiter Wellen sind dem Fachmann bekannt.

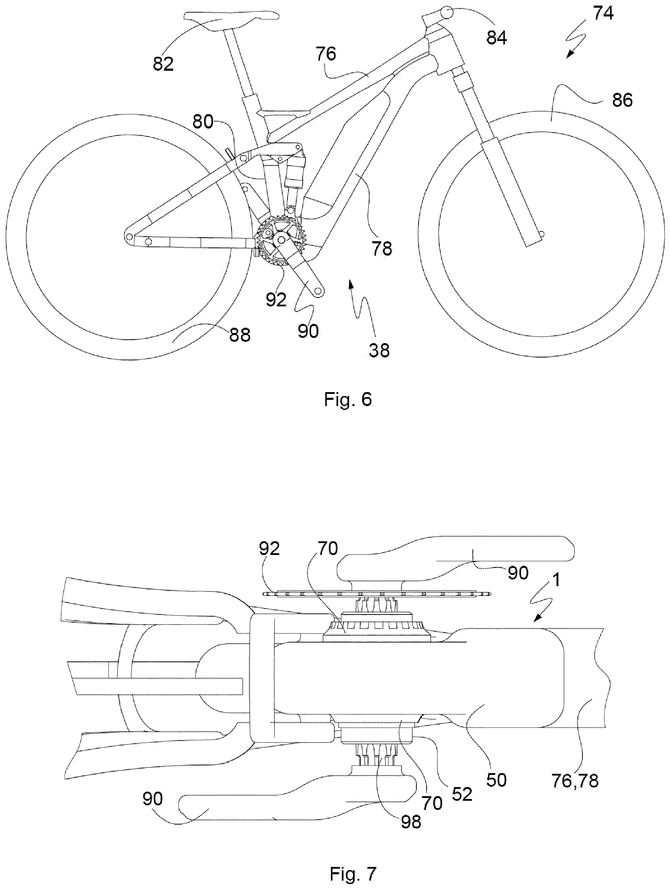

In Fig. 5 sind ferner zwei aus dem Gehäuse 50 herausragende Enden der ersten Welle 98 dargestellt, auf der das Schneckenrad 2 innerhalb des Gehäuses 50 gelagert ist, z.B. wie in Bezug auf Fig. 4 beschrieben ist. Ferner ist eine Lagerschale 70 dargestellt, die einen zylindrischen Fortsatz 72 des Gehäuses 50 aufnimmt. Eine zweite Lagerschale 70 ist an einem zweiten zylindrischen Fortsatz des Gehäuses 50 symmetrisch auf der anderen Seite des Gehäuses 50 angeordnet und aufgrund der isometrischen Darstellung in Fig. 5 nicht zu erkennen. Die Lagerschalen 70 dienen der Montage und Lagerung des Getriebes 1 am Fahrzeug, wie insbesondere unter Bezugnahme auf die Fig. 7 deutlich wird. Die erste Welle 98 kann auch direkt in den Lagerschalen 70 ohne Zwischenschaltung von Gehäuseabschnitten 72 gelagert sein. Es kann auch die Ausgangswelle 40 drehbar am Fahrzeug gelagert sein.

In Fig. 6 ist schematisch ein Fahrrad 74 in einer Seitenansicht dargestellt. Das Fahrrad 74 umfasst einen Rahmen, hier einen vollgefederten Mountainbike-Rahmen 76 mit einem Unterrohr 78 und einem Sattelrohr 80. Im Sattelrohr 80 ist eine Sattelstütze mit Sattel 82 aufgenommen. Ferner umfasst das Fahrrad 74 einen Lenker 84, der mit einem vorderen Laufrad 86 mittels einer Gabel verbunden ist. Ein hinteres Laufrad 88 ist im Rahmen 76 gelagert.

Zum Antreiben des Fahrrads 74 ist das hintere Laufrad 88 mittels Zugmitteln (z. B. einer Kette oder eines Zahnriemens) mit den Tretkurbeln 90 verbunden. Im manuellen Betrieb wird über nicht dargestellten Pedale eine Kraft auf die Tretkurbeln 90 übertragen, um diese um eine Kurbelwelle zu drehen. Die Drehbewegung wird über mindestens ein Kettenblatt 92 mittels der Zugmittel an das hintere Laufrad 88 übertragen.

Das dargestellte Fahrrad 74 umfasst einen erfindungsgemäßen Hilfsantrieb 38, wie er zuvor ausführlich beschrieben wurde. Der Hilfsantrieb 38 dient der Unterstützung des Fahrers durch Übertragung eines zusätzlichen Drehmoments auf die Ausgangswelle 40. Die Ausgangswelle 40 kann bereits der Kurbelwelle entsprechen oder mit der Kurbelwelle gekoppelt sein, wie zuvor bezüglich der Ausgangswelle 40 und der ersten Welle 98 ausführlich beschrieben wurde.

Vorzugsweise sind der Motor 32 und der Energiespeicher 36 koaxial zum Unterrohr 78 oder zum Sattelrohr 80 angeordnet. In der dargestellten Ausführungsform sind der Motor 32 und der Energiespeicher 36 in das Unterrohr 78 integriert, was durch dessen deutlich größere Abmessungen angedeutet ist.

Alternativ können der Motor 32 und der Energiespeicher 36 entnehmbar am Unterrohr 78 oder am Sattelrohr 80 befestigt sein. Dies ermöglicht bei modularem Aufbau des Hilfsantriebs 38 ein einfaches Entnehmen zur Wartung oder zum Austausch der Komponenten. In diesem Fall weisen der Motor 32 und der Energiespeicher 36 jeweils ein Gehäuse oder ein gemeinsames Gehäuse auf, das vorzugsweise bündig mit dem Unterrohr 78 oder dem Sattelrohr 80 des Fahrradrahmens 76 abschließt. Motor 32 und Energiespeicher 36 müssen nicht zwangsläufig in demselben Rohr 78, 80 aufgenommen sein.

Neben der in Fig. 6 gezeigten Hinterradfederungskonstruktion können auch andere Federungskonstruktionen mit dem erfindungsgemäßen Getriebe bzw. Hilfsantrieb verwendet werden, insbesondere aufgrund des schmalen Aufbaus entlang der Fahrradachse. Daraus ergibt sich gegenüber herkömmlichen Fahrradantrieben mit zum Teil mehrstufigen Getrieben im Tretlagerbereich ein entscheidender Vorteil.

In der Unteransicht nach Fig. 7 ist die Lagerung des Getriebes 1 am Fahrradrahmen 76 erkennbar. Die unter Bezugnahme auf Fig. 5 beschriebenen Lagerschalen 70 sind direkt mit dem Rahmen 76 verbunden, beispielsweise verschraubt. Eine über die Tretkurbeln 90 auf die erste Welle 98 bzw. Kurbelwelle ausgeübte Kraft wird in den Rahmen 76 eingeleitet. Allenfalls die Fortsätze 72 des Gehäuses 50 sind daher verstärkt auszubilden, um entsprechende Kräfte zu übertragen. Im Übrigen kann das Gehäuse sehr dünnwandig und/oder aus leichten Materialien ausgebildet sein, da es im Wesentlichen keine oder nur geringe Kräfte aufnehmen muss. Die Verbindung zum Rahmen 76 mittels der Lagerschalen 70 lässt sich auch schnell und einfach lösen, um Zugang zum Getriebe zu bekommen.

Ein weiterer Vorteil des erfindungsgemäßen Schneckengetriebes 1 ist, dass es sehr wenig Bauraum benötigt. Insbesondere baut das Schneckengetriebe 1 sehr schmal, so dass, wenn es als Tretlagergetriebe verwendet wird, wie in Fig. 7 gut erkennbar ist, neben dem Schneckengetriebe 1 ausreichend Platz auf der Ausgangswelle 40 verbleibt, um zumindest ein Kettenblatt 92, vorzugsweise zwei oder mehr Kettenblätter auf dieser zu lagern.

Vorzugsweise sind mindestens zwei Kettenblätter 92 auf der Ausgangswelle 40 angeordnet, um zusätzlich zum festen Übersetzungsverhältnis, das das Schneckengetriebe 1 bewirkt, weitere Übersetzungen bereitzustellen. Aufgrund der schmalen Bauart des Schneckengetriebes 1 ist das Vorsehen von zwei oder mehr Kettenblättern 92 auf der Ausgangswelle 40 möglich, trotz eines Q-Faktors von vorzugsweise höchstens 176 mm. Durch den Q-Faktor ist der der Bauraum in Querrichtung im Bereich des Tretlagers stark beschränkt. Bei alternativen Getriebeformen ist es daher nicht möglich, zwei oder mehr Kettenblätter auf der Ausgangswelle 40 anzuordnen.

Bei der Verwendung als Tretlager ist innerhalb des Getriebes 1 zudem vorzugsweise mindestens ein Sensor an der Ausgangswelle 40 und/oder gegebenenfalls an der ersten Welle 98 bzw. Kurbelwelle angeordnet, um z. B. die Drehzahl zu messen. Innerhalb des Getriebes können auch ein oder mehrere weitere Sensoren angeordnet sein, die z. B. Kräfte oder die Leistung erfassen. Die Anordnung innerhalb des Getriebes 1 bzw. Gehäuses 50 bietet den Sensoren Schutz vor äußeren Einflüssen, wie z. B. Verschmutzung und Witterungseinflüssen, wodurch die Messgenauigkeit verbessert werden kann. Die Sensoren übermitteln Daten an die Steuerelektronik, die von dieser zur Steuerung des Motors verarbeitet werden.

Es versteht sich, dass das erfindungsgemäße Schneckengetriebe 1 nicht nur Einsatz in Fahrrädern finden kann, sondern überall dort verwendet werden kann, wo bisher auch Schneckengetriebe eingesetzt wurden. Durch die Verringerung des benötigten Bauraums und der Reibungsverluste eröffnen sich ferner Anwendungsbereiche, für die Schneckengetriebe bisher nicht geeignet schienen.

Ein erfindungsgemäßer Hilfsantrieb 38 eignet sich ganz besonders zum Einsatz im Bereich von Pedelecs und E-Bikes, ist aber nicht auf diese beschränkt, sondern kann bei Fahrzeugen jeglicher Art verwendet werden.

Ein Fahrrad 74 mit einem erfindungsgemäßen Hilfsantrieb kann ein Fahrrad beliebiger Bauform sein, beispielsweise ein Mountainbike, Trekkingrad, Pedelec oder Lastenfahrrad mit zwei, drei oder vier Rädern.

## Patentansprüche

1. Schneckengetriebe (1) mit
einer Schnecke (4) mit zumindest einem schraubenförmigen Gang (6);
einem Schneckenrad (2), das eine Mehrzahl von entlang eines Umfangs des Schneckenrads (2) verteilte Laufrollen (8) umfasst, die dazu eingerichtet sind, mit dem Gang (6) der Schnecke (4) einzugreifen;
wobei jede Laufrolle (8) um eine Laufrollenachse (10) drehbar am Schneckenrad (2) gelagert ist; und
wobei die Laufrollenachsen (10) eine Schneckenradachse (12) nicht schneiden.

2. Schneckengetriebe (1) nach Anspruch 1, **dadurch gekennzeichnet, dass** sich der Durchmesser der Schnecke (4) in axialer Richtung der Schnecke (4) verändert, vorzugsweise von einem Ende der Schnecke (4) zum anderen Ende der Schnecke (4) zunimmt.

3. Schneckengetriebe (1) nach Anspruch 1 oder 2, **dadurch gekennzeichnet, dass** die Laufrollen (8) im Wesentlichen tonnenförmig, zylindrisch, ringförmig, oder scheibenförmig ausgebildet sind.

4. Schneckengetriebe (1) nach einem der vorangehenden Ansprüche, **dadurch gekennzeichnet, dass** jede Laufrolle (8) einen Rollenkörper (20) aufweist und jede Laufrolle (8) in axialer Richtung bezüglich der Laufrollenachse (10) beidseitig des Rollenkörpers (20) im Schneckenrad (2) gelagert ist.

5. Schneckengetriebe (1) nach einem der vorangehenden Ansprüche, **dadurch gekennzeichnet, dass** jede Laufrolle (8) eine umlaufende Lauffläche (14) aufweist und die Schnecke (4) eine Kontaktfläche (16) aufweist, wobei die Lauffläche (14) einer mit der Schnecke (4) in Eingriff stehenden Laufrolle (8) und die Kontaktfläche (16) der Schnecke (4) miteinander in Kontakt stehen, wobei die Laufflächen (14) und die Kontaktfläche (16) komplementär zueinander gekrümmt sind.

6. Schneckengetriebe (1) nach einem der vorangehenden Ansprüche, **dadurch gekennzeichnet, dass** es nur eine Wirkrichtung aufweist.

7. Hilfsantrieb (38) für ein Fahrzeug, insbesondere für ein Fahrrad (74), wobei der Hilfsantrieb (38) umfasst:
einen Motor (32) mit einer Antriebswelle (34);
einen Energiespeicher (36), der mit dem Motor (32) elektrisch verbunden ist;
eine Ausgangswelle (40) zum Antreiben des Fahrzeugs; und
ein Schneckengetriebe (1) mit einer Schnecke (4) und einem Schneckenrad (2), wobei die Schnecke (4) des Schneckengetriebes (1) mit der Antriebswelle (34) des Motors (32) gekoppelt ist, wobei das Schneckenrad (2) mit der Ausgangswelle (40) gekoppelt ist, und wobei die Schnecke (4) zumindest einen schraubenförmigen Gang (6) aufweist;
**dadurch gekennzeichnet, dass**
das Schneckenrad (2) eine Mehrzahl von entlang eines Umfangs des Schneckenrads (2) verteilte Laufrollen (9) umfasst, die dazu eingerichtet sind mit dem Gang (6) der Schnecke (4) einzugreifen.

8. Hilfsantrieb (38) nach Anspruch 7, **dadurch gekennzeichnet, dass** das Schneckengetriebe (1) gemäß einem der Ansprüche 1 bis 6 ausgebildet ist.

9. Hilfsantrieb (38) nach Anspruch 7 oder 8, **dadurch gekennzeichnet, dass** der Energiespeicher (36) und der Motor (32) mittels einer ersten lösbaren Verbindung (62) miteinander verbunden sind, und dass der Motor (32) und das Schneckengetriebe (1) mittels einer zweiten lösbaren Verbindung (64) miteinander verbunden sind, sodass der Hilfsantrieb (38) modular ausgebildet ist.

10. Hilfsantrieb (38) nach Anspruch 9, **dadurch gekennzeichnet, dass** die Schnecke (4) eine Schneckenwelle umfasst und dass die Schneckenwelle (66) und die Antriebswelle (34) des Motors (32) mittels einer Rotationsübertragungseinrichtung (68) miteinander verbunden sind.

11. Fahrrad (74) mit einem Hilfsantrieb (38) nach einem der Ansprüche 7 bis 10.

12. Fahrrad (74) nach Anspruch 11, **dadurch gekennzeichnet, dass** auf der Ausgangswelle (40) weiterhin zumindest ein Ritzel (92), vorzugsweise zwei Ritzel, gelagert sind, die über Zugmittel mit einem Laufrad (88) des Fahrrads (74) verbindbar sind.

13. Fahrrad (74) nach Anspruch 11 oder 12, **dadurch gekennzeichnet, dass** es einen Rahmen (76) mit einem Unterrohr (78) und einem Sattelrohr (80) umfasst und dass der Motor (32) und der Energiespeicher (36) koaxial zum Unterrohr (78) oder zum Sattelrohr (80) angeordnet sind und vorzugsweise in diese integriert sind.

14. Fahrrad (74) nach einem der Ansprüche 11 bis 13, **dadurch gekennzeichnet, dass** die Ausgangswelle (40) am Rahmen (76) gelagert ist.

15. Fahrrad (74) nach einem der Ansprüche 11 bis 14, **dadurch gekennzeichnet, dass** das Schneckenrad (2) über einen Freilauf mit der Ausgangswelle (40) verbunden ist.
